# EUROPÄISCHE PATENTSCHRIFT

(11) **EP 2 251 583 B1**
(45) Veröffentlichungstag und Bekanntmachung des Hinweises auf die Patenterteilung: **14.12.2011**
(21) Anmeldenummer: 09159870.6
(22) Anmeldetag: 11.05.2009
(51) Int. Cl.: F16M 11/32

(54) **Stativ, insbesondere Kamerastativ**
Support, in particular camera support
Support, notamment pour caméra

(43) Veröffentlichungstag der Anmeldung: 17.11.2010
(73) Patentinhaber: Camera Dynamics GmbH, 85386 Eching (DE)
(72) Erfinder: Hein, Dieter, 86949 Windach-Hechenwang (DE); Wessels, Dagmar, 80933 München (DE)
(74) Vertreter: HOFFMANN EITLE

(56) Entgegenhaltungen:
- WO-A-02/10635
- US-A- 4 695 021
- US-A- 4 767 090
- US-B1- 6 286 795
- US-B1- 6 631 877

## Beschreibung

### Technisches Gebiet

Die vorliegende Erfindung betrifft ein Stativ und insbesondere ein Kamerastativ mit den Merkmalen des Oberbegriffs von Anspruch 1.

### Hintergrund der Erfindung

Ein Stativ ist als Teleskopstativ mit zwei Teleskopeinheiten aus der DE 20 2007 012 585 U1 und mit drei Teleskopeinheiten aus der EP 0 813 021 B1 bekannt. Ein Stativ mit den Merkmalen im Oberbegriff von Anspruch 1 ist aus der US-A-4,767,090 bekannt.

Wird das Stativ durch Schwenken der Kamera tordiert, dann entsteht im einzelnen Stativbein eine Verwindung. Durch die feste Anbindung am Boden wird im Bereich des Fußes des Stativbeins eine Kraft senkrecht zur Längserstreckung des Stativbeins ausgeübt. Dadurch biegt sich das Stativbein aus seiner Ausgangsstellung senkrecht zu seiner Längserstreckung um einen gewissen Betrag X. Dies kann beispielsweise dann auftreten, wenn das Stativ gedreht wird, wenn die Füße des Stativs auf dem Boden aufstehen oder sogar ein formschlüssiger Eingriff zwischen den Füßen und dem Boden besteht.

### Darstellung der Erfindung

Die Aufgabe der vorliegenden Erfindung besteht darin ein Stativ der eingangs genannten Art zu schaffen, bei dem die Biegung der Stativbeine senkrecht zu deren Längserstreckung bei einer vorgegebenen Kraft reduziert ist.

Diese Aufgabe wird durch ein Stativ mit den Merkmalen des Anspruchs 1 gelöst. Vorteilhafte Weiterbildungen der vorliegenden Erfindung sind den Unteransprüchen zu entnehmen.

Der vorliegenden Erfindung liegt der Gedanke zu Grunde die Verriegelung zwischen zwei Teleskopeinheiten nicht wie üblich an nur einer Stelle vorzunehmen, sondern an wenigstens zwei in Längsrichtung der Beine beabstandeten Stellen. Dies führt bei einem zweistufigen Teleskopbein mit zwei Teleskopeinheiten zu zwei Verriegelungsstellen, bei einem dreistufigen Bein mit drei Teleskopeinheiten zu vier oder mehr Klemmstellen, etc.

Dementsprechend weist ein Stativ der vorliegenden Erfindung, bei dem es sich insbesondere um ein Kamerastativ handelt, eine Aufnahme zur Montage eines Geräts, insbesondere einer Kamera auf. Hierzu ist anzumerken, dass das Gerät entweder direkt oder indirekt mit der Aufnahme verbunden bzw. an dieser befestigt werden kann. Dabei ist es üblich verschiedene Arten von Kameraköpfen und vergleichbaren Elementen mit der Aufnahme zu verbinden, so dass die Montage der Kamera indirekt über den Kamerakopf in der Aufnahme erfolgt. Des Weiteren umfasst das Stativ der vorliegenden Erfindung wenigstens ein mit der Aufnahme in Verbindung stehendes Bein. Besonders bevorzugt sind hier Dreibeinstative mit drei derartigen Beinen, die vorzugsweise jeweils die gleiche Ausgestaltung aufweisen. Die Umsetzung ist aber auch bei Einbeinstativen denkbar. Die Beine sind dabei vorzugsweise gelenkig mit der Aufnahme verbunden, so dass die Beine aus einer Transportstellung in eine oder mehrere Betriebsstellungen verschwenkbar sind. Darüber hinaus ist das Bein bzw. sind die Beine teleskopierbar und umfasst bzw. umfassen wenigstens zwei Teleskopeinheiten, von denen eine erste Teleskopeinheit mit der Aufnahme in Verbindung steht und eine zweite Teleskopeinheit relativ zu der ersten Teleskopeinheit verschiebbar und in einer gewünschten Position zur ersten Teleskopeinheit verriegelbar ist. Hierbei ist es bevorzugt, dass die Verschieb- und Verriegelbarkeit der Teleskopeinheiten zueinander stufenlos möglich ist. Das erfindungsgemäße Stativ kennzeichnet sich insbesondere dadurch, dass zur Verriegelung der Teleskopeinheiten zwei in Längsrichtung des Beins beabstandete Verriegelungsstellen zwischen der zweiten Teleskopeinheit und der ersten Teleskopeinheit vorgesehen sind. Mit anderen Worten erfolgt eine Verriegelung der beiden Teleskopeinheiten zueinander an zwei in Längsrichtung zueinander beabstandeten Stellen. Dabei erfolgt die Verriegelung vorzugsweise reib- bzw. kraftschlüssig und insbesondere durch eine Klemmverbindung, so dass bei den Verriegelungsstellen auch von Klemmstellen gesprochen werden kann. Andererseits sind jedoch auch formschlüssige oder Kombinationen aus form- und kraftschlüssigen Verriegelungen denkbar. Durch die in Längsrichtung beabstandeten zwei Verriegelungspunkte wird die Stabilität des Beins, insbesondere in einer Richtung senkrecht zur Längserstreckung des Beins und damit dessen Steifigkeit erhöht. Dadurch ist es möglich bei einer vorgegebenen Kraft den Betrag der Biegung des Beins gegenüber eingangs genannten Stativen zu reduzieren.

Besonders vorteilhaft wirkt sich das erfinderische Konzept bei dreistufigen Teleskopstativen aus, bei denen das Bein ferner eine dritte Teleskopeinheit aufweist, die, auf die gleiche Art und Weise wie die zweite zur ersten Teleskopeinheit, zur zweiten Teleskopeinheit verschiebbar und in einer gewünschten Position zur zweiten Teleskopeinheit verriegelbar ist, wobei auch hier zur Verriegelung der Teleskopeinheiten zwei in Längsrichtung des Beins beabstandete Verriegelungsstellen zwischen der dritten Teleskopeinheit und der zweiten Teleskopeinheit vorgesehen sind. Bei dieser Ausgestaltung konnte der Betrag X bei einer vorgegebenen Kraft im Vergleich zum Stand der Technik sogar um ein Vielfaches reduziert werden.

Dabei weist die erste Teleskopeinheit ein Verbindungsstück zur, vorzugsweise gelenkigen, Verbindung mit der Aufnahme, eine erste Traverse und einen ersten länglichen Beinabschnitt, der mit dem Verbindungsstück und der ersten Traverse verbunden ist, auf. Hierbei verläuft der erste Beinabschnitt in Längsrichtung des Beins, wohingegen das Verbindungsstück und die erste Traverse quer zur Längsrichtung des Beins verlaufen. Darüber hinaus ist es bevorzugt, dass der Beinabschnitt aus zwei parallel und in einem Abstand zueinander in Querrichtung des Beins angeordneten ersten Teleskoprohren gebildet ist. Des Weiteren umfasst die zweite Teleskopeinheit eine zweite Traverse, die sich zur Führung der zweiten Teleskopeinheit an dem ersten Beinabschnitt bzw. den ersten Teleskoprohren abstützt, eine dritte Traverse und einen zweiten länglichen Beinabschnitt, der mit der zweiten und der dritten Traverse verbunden ist. Auch hier ist es bevorzugt, dass der zweite längliche Beinabschnitt aus zwei quer zur Längsrichtung der Beine parallelen und in einem Abstand angeordneten zweiten Teleskoprohren gebildet wird und sich die zweite und dritte Traverse quer zur Längsrichtung des Beins erstrecken. Bei dieser Ausgestaltung ist es besonders bevorzugt, dass eine erste Verriegelungsstelle zwischen der ersten Teleskopeinheit und der zweiten Teleskopeinheit durch einen ersten Verriegelungsmechanismus gebildet ist, der von der ersten Traverse aufgenommen ist, d.h. die erste Traverse trägt den ersten Verriegelungsmechanismus. Eine zweite Verriegelungsstelle zwischen der ersten Teleskopeinheit und der zweiten Teleskopeinheit ist durch einen zweiten Verriegelungsmechanismus gebildet, welcher von der zweiten Traverse aufgenommen bzw. von dieser getragen ist. Insbesondere, wenn der erste und zweite Beinabschnitt durch beabstandete parallel angeordnete Teleskoprohre gebildet wird, ergibt sich eine zusätzlich Steifigkeit der Beine in der gewünschten Richtung. Darüber hinaus bieten die jeweiligen Traversen die Möglichkeit die Verriegelungsmechanismen auf einfachste Art und Weise und vorzugsweise geschützt vorzusehen.

Ferner ist die dritte Teleskopeinheit mit einem Fuß und einer vierten Traverse, die sich zur Führung der dritten Teleskopeinheit an dem zweiten Beinabschnitt bzw. den zweiten Teleskoprohren abstützt und wenigstens einem dritten länglichen Beinabschnitt versehen. Dabei kann der dritte längliche Beinabschnitt durch ein drittes Teleskoprohr ggf. auch zwei parallel und in einem Abstand zueinander angeordnete dritte Teleskoprohre gebildet sein. Dabei ist eine erste Verriegelungsstellen zwischen der dritten Teleskopeinheit und der zweiten Teleskopeinheit durch einen dritten Verriegelungsmechanismus gebildet, der von der dritten Traverse aufgenommen bzw. von dieser getragen ist und eine vierte Verriegelungsstelle zwischen der dritten Teleskopeinheit und der zweiten Teleskopeinheit ist durch einen vierten Verriegelungsmechanismus gebildet, der von der vierten Traverse aufgenommen bzw. getragen ist.

Erfindungsgemäß ist trotz der mehreren Verriegelungsstellen bzw. Verriegelungsmechanismen eine Betätigung einiger, bevorzugt aller, Verriegelungsmechanismen von einer Stelle aus möglich ist. Hierzu ist eine erste Koppeleinrichtung vorgesehen, die die zweite Traverse mit dem vierten Verriegelungsmechanismus verbindet. Dies ermöglicht es auch den vierten Verriegelungsmechanismus, der zwischen der zweiten Teleskopeinheit und der dritten Teleskopeinheit wirkt und von der vierten Traverse aufgenommen ist, von der zweiten Traverse aus zu betätigten. Bei der Koppeleinrichtung handelt es sich bevorzugterweise um einen Stab, insbesondere einen Torsionsstab, der in Längsrichtung des Beins bzw. der Beine verläuft. Vorteilhafterweise wird der Verriegelungsmechanismus durch eine Rotation des Torsionsstabs betätigt. Alternativ ist es jedoch auch denkbar die Koppeleinrichtung aus einem biegeschlaffen Element, z. B. einem Stahlseil zu bilden. Des Weiteren ist es auch denkbar, dass die Koppeleinrichtung nicht rotiert wird, um den Verriegelungsmechanismus zu betätigen, sondern eine translatorische Bewegung in Längsrichtung der Beine oder quer dazu erfolgt.

Ferner ist es zum Schutz der ersten Koppeleinrichtung einerseits und um viele Zwischenräume zwischen den Teleskopbeinen, in denen sich Gegenstände verklemmen können, zu vermeiden vorteilhaft die erste Koppleinrichtung in einem Gehäuse unterzubringen, das die erste Koppeleinrichtung vorzugsweise vollständig und in jedem teleskopischen Zustand des Beins umgibt, wobei das Gehäuse Teil des zweiten Beinabschnitts ist. Gemäß einer bevorzugten Ausführungsform kann der dritte Beinabschnitt in diesem Gehäuse geführt sein, d.h. sich an diesem zweiten Beinabschnitt abstützt.

Darüber hinaus kann es bevorzugt sein auch eine zweite Koppeleinrichtung vorzusehen, die die zweite Traverse mit dem dritten Verriegelungsmechanismus verbindet, der von der dritten Traverse aufgenommen ist, so dass auch der dritte Verriegelungsmechanismus an der weiter unten liegenden dritten Traverse, welche über der vierten Traverse liegt, von der zweiten Traverse aus betätigen werden kann.

Auch hier ist es zum Schutz der zweiten Koppeleinrichtung, die gleichermaßen wie die erste Koppeleinrichtung ausgestaltet sein kann und um Zwischenräume zu vermeiden vorteilhaft, die zweite Koppeleinrichtung in dem zweiten Beinabschnitt aufzunehmen. Hier ist es besonders bevorzugt, die zweite Koppeleinrichtung in einem der zwei parallel und beabstandet angeordneten zweiten Teleskoprohre anzuordnen.

Des Weiteren ist es bevorzugt, dass der dritte und vierte Verriegelungsmechanismus gemeinsam mit dem ersten und dem zweiten Verriegelungsmechanismus betätigbar sind. Das bedeutet, dass alle vier Verriegelungsstellen bzw. vier Verriegelungsmechanismen auf einmal betätigt werden können, wobei dies vorzugsweise über eine gemeinsame Handhabe, z.B. einen Betätigungshebel erzielbar ist, dessen Betätigung alle Verriegelungsmechanismen gemeinsam betätigt. Hierbei kann die Handhabe, insbesondere bei Umsetzung eines Betätigungshebels so ausgestaltet sein, dass der Betätigungshebel zweigeteilt ist und sowohl die gemeinsame wie auch die separate Betätigung der Verriegelungsmechanismen für die einzelnen Teleskopstufen möglich ist. Darüber hinaus ist anzumerken, dass der Betätigungshebel in Abhängigkeit von der verwendeten Koppeleinrichtung um eine Achse parallel zu Längserstreckung des Beins verschwenkbar oder um eine Achse senkrecht dazu verschwenkbar ausgestaltet sein kann. Des Weiteren ist es auch denkbar statt eines Betätigungshebels eine rotatorische Handhabe in Form eines Drehknopfes zu verwenden.

Des Weiteren ist es bevorzugt auch den ersten und zweiten Verriegelungsmechanismus über eine dritte Koppeleinrichtung miteinander zu verbinden, so dass auch diese gemeinsam betätigbar sind. Dabei bieten sich für die dritte Koppeleinrichtung verschiedenartige Ausgestaltungen an, wie sie oben beschrieben wurden.

Gemäß einer Ausführungsform kann eine Handhabe bzw. die oben erwähnte Handhabe an der zweiten Traverse vorgesehen sein und mit der dritten Koppeleinrichtung so zusammenwirken, dass der erste Verriegelungsmechanismus, der in der ersten Traverse, welche sich unterhalb der zweiten Traverse befindet, von der zweiten Traverse aus betätigt werden kann. Bei dieser Ausführungsform ist es zum Schutz der dritten Koppeleinrichtung und um Zwischenräume zu vermeiden bevorzugt die dritte Koppeleinrichtung in dem ersten Beinabschnitt aufzunehmen bzw. einem der oben erwähnten ersten Teleskoprohre.

Alternativ kann es bei Anordnung der Handhabe an der zweite Traverse, die mit der dritten Koppeleinrichtung zusammenwirkt, vorteilhaft sein die dritte Koppeleinrichtung durch den zweiten Beinabschnitt, insbesondere eines oder vorzugsweise beide zweite Teleskoprohre zu bilden. Hierfür ist bzw. sind der zweite Beinabschnitt, insbesondere wenigstens eines, vorzugsweise beide, zweiten Teleskoprohre beweglich, vorzugsweise drehbar, in der zweiten und dritten Traverse gelagert. Dadurch wird ein zusätzliches Element für die dritte Koppeleinrichtung vermieden und durch ein ohnehin vorhandenes Element ersetzt. Auch ist kein zusätzlicher Schutz der dritten Koppeleinrichtung notwendig, da diese durch die zweiten Teleskoprohre selbst gebildet wird.

Als weitere Alternative bietet sich die Möglichkeit die Handhabe nicht an der zweiten Traverse, sondern vielmehr am Verbindungsstück vorzusehen, welches mit der Aufnahme verbunden ist. Dadurch ist es möglich die Verriegelungsmechanismen, vorzugsweise alle, von der obersten Stelle des Stativs bedienen zu können, was die angenehme Handhabung des Stativs weiter verbessert. Hierbei ist es bevorzugt, dass die zweite Traverse relativ zur dritten Koppeleinrichtung längs verschiebbar ist. Dabei läuft die dritte Koppeleinrichtung vorzugsweise durch die zweite Traverse, um den dort angeordneten zweiten Verriegelungsmechanismus betätigen zu können.

Ferner ist es bevorzugt, dass die Handhabe an der dritten Koppeleinrichtung befestigt, z.B. formschlüssig damit verbunden ist, was insbesondere dann vorgesehen wird, wenn die Handhabe am Verbindungsstück angeordnet ist. Ist die Handhabe an der zweiten Traverse vorgesehen, aber auch in anderen Fällen, kann eine Übertragungseinrichtung vorgesehen sein, um die Bewegung der Handhabe, z.B. das Verschwenken des Betätigungshebels, auf wenigstens eine der Koppeleinrichtungen, vorzugsweise zwei der oder alle Koppeleinrichtungen zu übertragen. Ist die Handhabe beispielsweise am Verbindungsstück angeordnet und die dritte Koppeleinrichtung daran befestigt, so kann es erforderlich sein die Bewegung der Handhabe entweder direkt von der Handhabe oder über die dritte Koppeleinrichtung auf die erste und/oder zweite Koppeleinrichtung zu übertragen. Bei einer anderen Ausführungsform, bei der die Handhabe an der zweiten Traverse angeordnet ist, kann es auch denkbar sein, dass die Bewegung der Handhabe nur über die Übertragungseinrichtung auf die Koppeleinrichtungen erfolgt.

Auch kann es in einer besonderen Ausgestaltung möglich sein, dass die zweite Koppeleinrichtung durch die dritte Koppeleinrichtung gebildet ist, wodurch nur zwei Koppeleinrichtungen notwendig werden.

Weitere Vorteile und Merkmale der vorliegenden Erfindung, die für sich oder in Kombination mit einem oder mehreren der obigen Merkmale umgesetzt werden können, sind aus der folgenden Beschreibung bevorzugter Ausführungsformen der vorliegenden Erfindung ersichtlich, die unter Bezugnahme auf die begleitenden Zeichnungen erfolgt.

### Kurze Figurenbeschreibung

In den Zeichnungen zeigt:
Figur 1 eine Draufsicht auf ein Bein eines Stativs gemäß einer ersten Ausführungsform der vorliegenden Erfindung;
Figur 2 einen Längsschnitt entlang der Linie A-A aus Figur 1;
Figur 3 einen Querschnitt entlang der Linie E-E aus Figur 1;
Figur 4 einen Querschnitt entlang der Linie B-B aus Figur 1;
Figur 5 einen Querschnitt entlang der Linie C-C aus Figur 1;
Figur 6 einen Querschnitt entlang der Linie F-F aus Figur 1;
Figur 7 einen Querschnitt entlang der Linie H-H aus Figur 2;
Figur 8 eine Draufsicht auf ein Bein eines Stativs gemäß einer zweiten Ausführungsform der vorliegenden Erfindung;
Figur 9 eine Seitenansicht des Beins aus Figur 8;
Figur 10 einen Längsschnitt entlang der Linie F-F aus Figur 9;
Figur 11 einen Querschnitt entlang der Linie B-B aus Figur 8;
Figur 12 einen Querschnitt entlang der Linie C-C aus Figur 8;
Figur 13 einen Querschnitt entlang der Linie E-E aus Figur 8; und
Figur 14 einen Querschnitt entlang der Linie D-D aus Figur 8.

### Beschreibung bevorzugter Ausführungsformen

In den folgenden Zeichnungen wurden für gleiche oder vergleichbare Elemente die gleichen Bezugsziffern verwendet und an geeigneten Stellen zu Vermeidung von Wiederholungen auf eine erneute Beschreibung verzichtet.

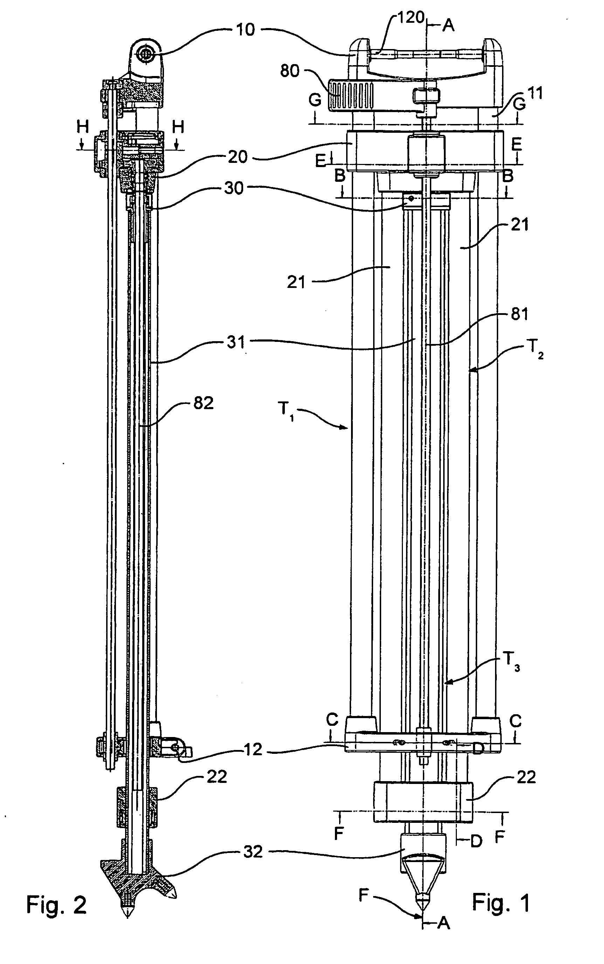

Im Folgenden wird unter Bezugnahme auf die Figuren 1 bis 7 eine erste Ausführungsform der vorliegenden Erfindung erläutert.

Das in Figur 1 und dem Längsschnitt in Figur 2 dargestellte Bein eines Stativs gemäß einer ersten Ausführungsform bildet ein Bein von drei Beinen eines solchen Stativs. Dabei handelt es sich um ein dreistufiges Teleskopbein mit einer ersten Teleskopeinheit T1, einer zweiten Teleskopeinheit T2 und einer dritten Teleskopeinheit T3.

Die erste Teleskopeinheit T1 weist ein Verbindungsstück 10 mit einer Gelenkachse 120 auf. Die Gelenkachse 120 dient der Verbindung des Verbindungsstücks 10 mit der nicht dargestellten Aufnahme und ermöglicht ein Verschwenken des dargestellten Beins relativ zur Aufnahme um die Achse 120. Ferner weist die erste Teleskopeinheit.T1 zwei in Längsrichtung L des Beins angeordnete Teleskoprohre 11 (erster Beinabschnitt) auf. Diese Teleskoprohre 11 verlaufen parallel zueinander und quer zur Längsrichtung L in einem Abstand zueinander. Sie sind dabei aus Gewichtsgründen, vorzugsweise zumindest teilweise hohlzylindrisch ausgestaltet, könnten jedoch auch aus Vollmaterial bestehen. Als Material wird hier insbesondere Aluminium, Karbon oder ein anderes leichtes Material gewählt. Des Weiteren weist die erste Teleskopeinheit T1 eine erste Traverse 12 auf, die auch als Flachschieber bezeichnet wird. Das Verbindungsstück 10 und die erste Traverse 12 sind in Längsrichtung L in einem Abstand zueinander angeordnet und durch die Teleskoprohre 11 miteinander verbunden.

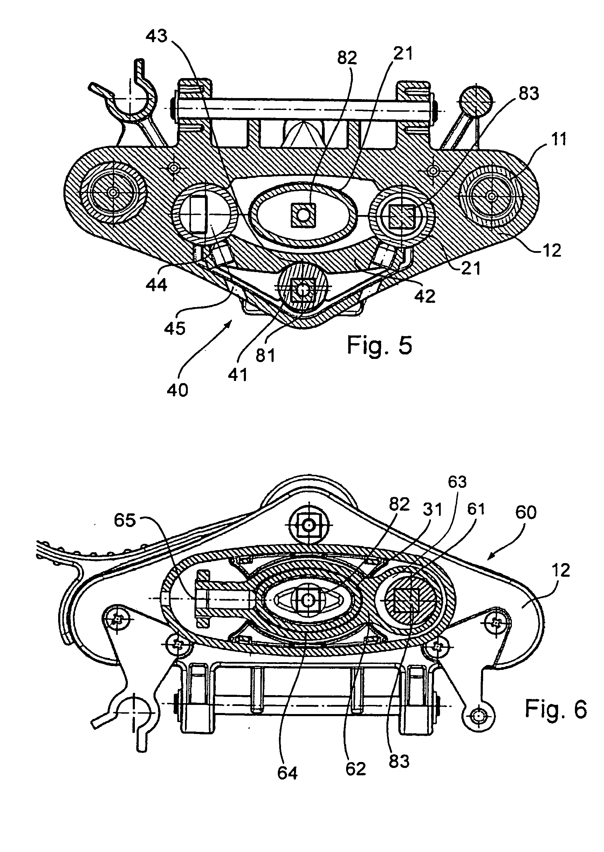

Die zweite Teleskopeinheit T2 weist eine zweite Traverse 20 auf, die zwischen dem Verbindungsstück 10 und der ersten Traverse 12 der ersten Teleskopeinheit T1 angeordnet ist. Dabei ist die zweite Traverse 20 so ausgestaltet, dass sie sich an den ersten Teleskoprohren 11 abstützt. Dies wird bei der dargestellten Ausführungsform dadurch gelöst, dass die zweite Traverse 20 durch die ersten Teleskoprohre 11 verläuft. Das kann, wie dargestellt dadurch erzielt werden, dass die zweite Traverse 20 auf den ersten Teleskoprohren 11 diese umfänglich umgebend läuft. Andererseits ist es jedoch auch denkbar, dass die zweite Traverse 20 die ersten Teleskoprohre 11 nur teilweise an den einander zugewandten Seiten umgreift und dadurch die Führung erzielt wird (siehe zweite Ausführungsform). Des Weiteren weist die zweite Teleskopeinheit T2 zweite Teleskoprohre 21 (zweiter Beinabschnitt) auf. Die zweiten Teleskoprohre 21 verlaufen parallel zueinander, wie auch zu den ersten Teleskoprohren 11 und sind in einem Abstand quer zur Längsrichtung L beabstandet. Sie laufen bei der dargestellten Ausführungsform zwischen den ersten Teleskoprohren 11, sind jedoch, wie es beispielsweise aus dem Schnitt in Figur 5 ersichtlich ist, geringfügig nach vorne versetzt. Die zweiten Teleskoprohre 21 sind ansonsten auf gleiche Art und Weise wie die ersten Teleskoprohre 11 ausgestaltet. Des Weiteren umfasst die zweite Teleskopeinheit T2 eine dritte Traverse 22, wobei die zweiten Teleskoprohre 21 die zweite Traverse 20 und die dritte Traverse 22 miteinander-verbinden.

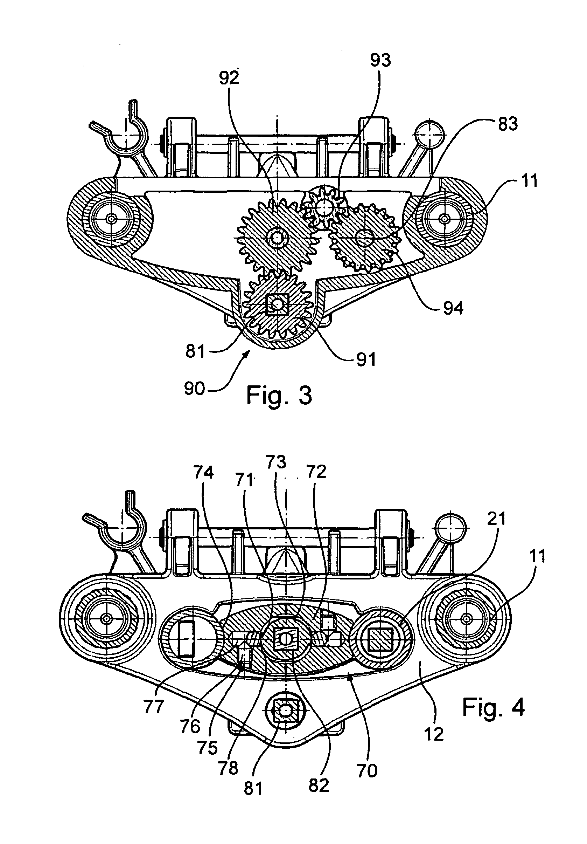

Die dritte Teleskopeinheit T3 weist eine vierte Traverse 30 auf, die sich an den zweiten Teleskoprohren 21 beidseits abstützt. Hier folgt die Abstützung derart, dass die vierte Traverse 30 durch die zweiten Teleskoprohre 21 geführt ist. Anders als bei der zweiten Traverse durchlaufen die zweiten Teleskoprohre 21 die vierte Traverse 30 jedoch nicht derart, dass sie voll umfänglich umgeben sind, sondern die vierte Traverse umgreift die zweiten Teleskoprohre 21, ähnlich wie es im Schnitt in Figur 4 dargestellt ist, nur teilweise. Durch die beidseitige Abstützung erfolgt auch hier jedoch eine ausreichende Führung. Die vierte Traverse 30 ist dabei zwischen der zweiten 20 und ersten 12 Traverse angeordnet. Des Weiteren umfasst die dritte Teleskopeinheit T3 ein drittes Teleskoprohr 31 (dritter Beinabschnitt), das im Querschnitt anders als die kreisrunden ersten und zweiten Teleskoprohre oval ausgebildet ist, wie es aus Figur 6 ersichtlich ist. Dabei ist die größere Dimension des ovalen Querschnitts des dritten Teleskoprohrs 31 derart bemessen, dass das dritte Teleskoprohr 31 zwischen den zweiten Teleskoprohren 21 mit im Wesentlichen fluchtenden Mittelpunkten (siehe Figur 5) laufen kann.

Ferner weist die dritte Teleskopeinheit T3 einen Fuß 32 auf, wobei das dritte Teleskoprohr 31 die vierte Traverse 30 und den Fuß 32 verbindet.

Die Reihenfolge der einzelnen Elemente in Längsrichtung von oben nach unten ist dabei derart, dass dem Verbindungsstück 10, die zweite Traverse 20, die vierte Traverse 30, die erste Traverse 12, die dritte Traverse 22 und der Fuß 32 folgen.

Erfindungsgemäß sind zwischen der ersten Teleskopeinheit T1 und der zweiten Teleskopeinheit T2, die relativ zueinander verschiebbar sind, und stufenlos verriegelt werden können, zwei in Längsrichtung L beabstandete Verriegelungsstellen vorgesehen, die an der ersten 12 und zweiten 20 Traverse angeordnet sind und durch einen ersten 40 und zweiten 50 Verriegelungsmechanismus realisiert sind.

Die zweite Teleskopeinheit T2 und die dritte Teleskopeinheit T3 sind gleichfalls relativ zueinander verschiebbar und in einer gewünschten Position stufenlos verriegelbar. Dabei erfolgt die Verriegelung an der dritten Traverse 22 und der vierten Traverse 30 entsprechend durch einen dritten 60 und vierten 70 Verriegelungsmechanismus.

Mit anderen Worten erfolgt die Verriegelung der Teleskopeinheiten zueinander an je zwei in Längsrichtung L beabstandeten Stellen, wodurch bei einer Kraftbeaufschlagung auf den Fuß 32 in Richtung F (siehe Figur 1) der Betrag, um den sich der Fuß 32 in Figur 1 nach rechts versetzt im Vergleich zum Stand der Technik reduziert werden kann. Mit anderen Worten wird ein biegesteiferes und stabileres Stativbein und damit Stativ geschaffen.

Im Folgenden wird der erste Verriegelungsmechanismus 40 in der ersten Traverse 12 unter Bezugnahme auf den Querschnitt in Figur 5 erläutert. Der erste Verriegelungsmechanismus 40 umfasst einen Exzenter 41. Der Exzenter 41 ist relativ zur ersten Traverse 12 drehbar und wirkt auf ein Klemmelement 42. Das Klemmelement 42 ist in der ersten Traverse 12 translatorisch senkrecht zum Exzenter 41 verschieblich aufgenommen. Das Klemmelement 42 weist dabei einerseits eine Aussparung 43 auf, in die der Exzenter 41 eingreift und andererseits Klemmflächen 44, die jeweils mit der Außenfläche eines der zweiten Teleskoprohre 21 in Eingriff bringbar sind, um die erste Traverse 12 relativ zu den zweiten Teleskoprohren 21 durch eine kraftschlüssige Verbindung zwischen dem Klemmelement 42 bzw. dessen Klemmflächen 44 und den zweiten Teleskoprohren 21 und damit eine Verriegelung der ersten Teleskopeinheit T1 relativ zur zweiten Teleskopeinheit T2 an einer ersten Klemmstelle zu bewirken. Um die Klemmkraft justierbar zu gestalten, sind von außen zugänglich Einstelleinrichtungen 45 hier in Form von Madenschrauben vorgesehen, die die Klemmfläche 44 bilden. Durch Drehung der Madenschrauben 45 werden diese bei gleicher Stellung des Klemmelements 42 stärker oder weniger stark gegen die Außenfläche der zweiten Teleskoprohre 21 gedrückt.

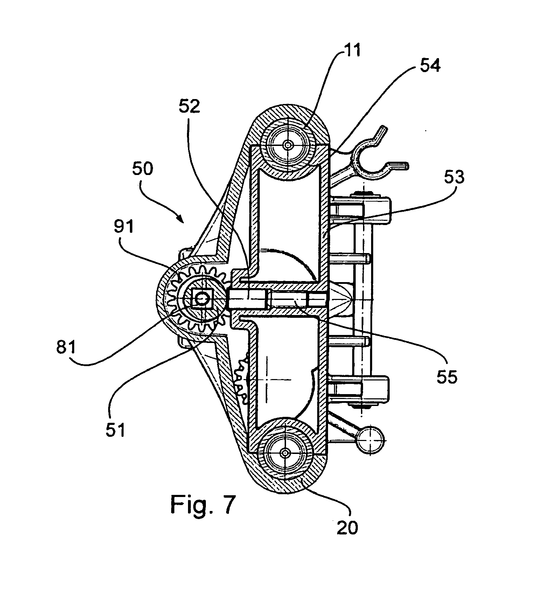

Im Folgenden wird der zweite Verriegelungsmechanismus 50 unter Bezugnahme auf den Querschnitt in Figur 7 näher erläutert. Der zweite Verriegelungsmechanismus 50 weist ein Exzenter 51 auf. Der Exzenter 51 ist in der zweiten Traverse 20 aufgenommen und relativ zu dieser drehbar. Ferner ist in der zweiten Traverse 20 ein Stift 52 vorgesehen, der mit dem Exzenter 51 zusammenwirkt. Der Stift 52 ist dabei senkrecht zum Exzenter 51 translatorisch verschieblich. Ferner ist der Stift 52 keil- oder kegelförmig ausgestaltet. Senkrecht zur Mittelachse des Stifts 52 translatorisch verschieblich sind ferner zwei Klemmelemente 53 in der zweiten Traverse 20 vorgesehen. Dabei wirkt der Stift 52 derart miteinander zugewandten Flächen der Klemmelemente 53 zusammen, dass diese bei Betätigung des Exzenters 51 senkrecht zur Mittelachse des Stifts 52 und zur Längserstreckung L verschoben werden. Die Klemmelemente weisen jeweils eine Klemmfläche 54 auf, die mit der Außenfläche der ersten Teleskoprohre 11 in Eingriff bringbar ist, wobei die Klemmflächen 54 bei der dargestellten Ausführungsform die ersten Teleskoprohre 11 halbumfänglich umgeben. Ferner ist auch beim zweiten Verriegelungsmechanismus 50 eine Einstelleinrichtung 55 vorgesehen, die von außen zugänglich ist. Auch hier ist die Einstellvorrichtung 55 in Form einer Madenschraube ausgestaltet, die weiter ein- oder weiter herausgeschraubt werden kann. Durch die Madenschraube wird der Weg bestimmt, den der Stift 52 durch den Exzenter veschiebbar ist und damit über die keil- bzw. kegelförmige Fläche, die mit den Klemmelementen 53 zusammenwirkt, der Weg der Klemmelemente 53 senkrecht zu den ersten Teleskoprohren 11. Damit kann die Klemmkraft der Klemmelemente 53 auf diese Rohre 11 bestimmt werden.

Im Folgenden wird der dritte Verriegelungsmechanismus 60 unter Bezugnahme auf den Schnitt in Figur 6 erläutert. Auch der dritte Verriegelungsmechanismus 60 umfasst einen relativ zur dritten Traverse 22 drehbar gelagerten Exzenter 61. Der Exzenter 61 wirkt dabei mit einem Klemmelement 62 zusammen. Das Klemmelement 62 weist ein Auge 63 mit einem Innendurchmesser auf, der größer ist als der Außendurchmesser des Exzenters 61 und umgibt den Exzenter 61 vollständig. Ferner weist das Klemmelement 62 eine Klemmfläche 64 auf, die mit der Außenfläche des dritten Teleskoprohrs 31 in Reibschluss bzw. Kraftschluss bringbar ist, um die dritte Traverse 22 und damit die zweite Teleskopeinheit T2 relativ zum dritten Teleskoprohr 31 und damit der dritten Teleskopeinheit T3 verriegeln zu können. Ferner ist auch hier eine von außen zugängliche Einstellvorrichtung 65 vorgesehen, über die die Kraft der Klemmung eingestellt werden kann.

Der vierte Verriegelungsmechanismus 70 wird unter Bezugnahme auf Figur 4 erläutert. Auch der vierte Verriegelungsmechanismus 70 umfasst einen Exzenter 71, der jedoch im Gegensatz zu den Exzentern 41, 51, 61 auf entgegengesetzten Seiten wirkt. Der Exzenter 71 ist relativ zur vierten Traverse 30 drehbar und wirkt mit zwei gegenüber angeordneten Klemmelementen 72 zusammen. Die Klemmelemente 72 sind senkrecht zum Exzenter 71 translatorisch verschieblich von der vierten Traverse 30 aufgenommen und definieren zusammen eine den Exzenter 71 aufnehmende Aussparung 73. Auf den die Aussparung 73 bildenden entgegengesetzten Seiten weisen die Klemmelemente 72 entsprechende Klemmflächen 74 auf, die mit Außenflächen der zweiten Teleskoprohre 21 kraftschlüssig in Kontakt bringbar sind, um eine Verriegelung der zweiten Teleskopeinheit T2 relativ zur dritten Teleskopeinheit T3 an einer vierten Verriegelungsstelle zu erzielen. Auch hier ist eine Einstelleinrichtung 75 vorgesehen, die von außen zugänglich ist und die Kraft, mit der die Klemmflächen 74 mit den Außenflächen der zweiten Teleskoprohre 21 in Eingriff gebracht werden können, einstellbar macht. Hierzu werden je eine Madenschraube 76 und eine in einen in die Aussparung 73 mündenden Kanal 77 aufgenommene Kugel 78 gebildet.

Des Weiteren wird im Folgenden der die Verriegelungsmechanismen verbindende Betätigungsmechanismus erläutert. Bei der dargestellten Ausführungsform weist der Betätigungsmechanismus eine Handhabe 80 in Form eines Betätigungshebels auf, der um eine Achse parallel zur Längsrichtung L verschwenkbar ist. Der Betätigungshebel 80 ist dabei an dem Verbindungsstück 10 angebracht, so dass eine Betätigung aller Verriegelungsmechanismen an der obersten Position des dargestellten Beins und damit des erfindungsgemäßen Stativs gewährleistet ist. Alternativ ist es jedoch auch denkbar den Betätigungshebel 80 an der zweiten Traverse 20 anzubringen. Der Betätigungshebel 80 ist mit einem Torsionsstab 81 (dritte Koppeleinrichtung) formschlüssig verbunden, wobei der Torsionsstab 81 gleichfalls um eine Achse parallel zur Längsrichtung L drehbar und vorzugsweise als Vierkant oder Mehrkant ausgestaltet ist (siehe diesbezüglich z.B. Figur 4 oder 5). Der Torsionsstab 81 verläuft dabei von der Betätigungseinrichtung 80 zur Betätigung des zweiten Verriegelungsmechanismuses 50 durch die zweite Traverse 20 und von dort bis zur ersten Traverse 12, wo der erste Verriegelungsmechanismus zu betätigen ist. Hierfür ist der Torsionsstab 81 mit dem Exzenter 51 des zweiten Verriegelungsmechanismus 50 formschlüssig verbunden (siehe Figur 7), wodurch sich der Exzenter 51 auf eine Rotation des Torsionsstabs 81 dreht. Des Weiteren ist der Torsionsstab 81 formschlüssig mit dem Exzenter 41 des ersten Verriegelungsmechanismuses 40 in der ersten Traverse 12 verbunden, so dass auf eine Rotation des Torsionsstabs 81 der Exzenter 41 gedreht wird. Durch den Torsionsstab 81 werden der erste und zweite Verriegelungsmechanismus 40 bzw. 50 gemeinsam über nur einen Betätigungshebel 80 an möglichst hoher bevorzugt oberster Position betätigbar.

Des Weiteren umfasst der Betätigungsmechanismus eine Übertragungseinrichtung, die im Schnitt in Figur 3 näher dargestellt ist. Die Übertragungseinrichtung besteht bei der dargestellten Ausführungsform aus mehreren Zahnrädern, kann aber auch aus Steuerkurven, Gestängen, Riemen, insbesondere Zahnriemen, etc. gebildet werden.

Dabei ist ein erstes Zahnrad 91 formschlüssig mit dem Torsionsstab 81 verbunden und dreht sich damit zusammen mit dem Torsionsstab 81 und den Exzentern 41 und 51 der Verriegelungsmechanismen 40 und 50.

Das erste Zahnrad 91 kämmt mit einem zweiten Zahnrad 92, dessen Mittelachse zur Mittelachse des dritten Teleskoprohrs 31 ausgerichtet ist bzw. mit dieser fluchtet. Mit diesem zweiten Zahnrad 92 ist ein weiterer Torsionsstab 82 (erste Koppeleinrichtung) verbunden und dreht sich zusammen damit. Der weitere Torsionsstab 82 verläuft dabei, wie es dem Schnitt in Figur 2 zu entnehmen ist, im zusammengeschobenen Zustand der Teleskopeinheiten T1 bis T3 in dem dritten Teleskoprohr 31. Der weitere Torsionsstab 82 ist formschlüssig mit dem Exzenter 71 des vierten Verriegelungsmechanismus 70 verbunden, so dass sich auf eine Drehung des Torsionsstabs 82 der Exzenter 71 dreht und der vierte Verriegelungsmechanismus 70 betätigt wird. Dabei ist der Exzenter 71 in Längsrichtung L auf dem weiteren Torsionsstab 82 verschiebbar. Auch der weitere Torsionsstab 32 ist als Vierkant oder Mehrkant ausgestaltet, um eine formschlüssige Verbindung mit dem Exzenter 71 und eine gute Drehmomentübertragung erzielen zu können.

Des Weiteren weist der Übertragungsmechanismus 90 unter Bezugnahme auf Figur 3 ein drittes Zahnrad 93 mit kleinerem Durchmesser und ein viertes Zahnrad 94 auf, wobei das dritte Zahnrad 93 mit dem zweiten Zahnrad 92 und dem vierten Zahnrad 94 kämmt. Das vierte Zahnrad 94 ist mit seinem Mittelpunkt fluchtend zur Mittelachse eines zweiten Teleskoprohrs 21 angeordnet. Das vierte Zahnrad 94 ist mit einem weiteren Torsionsstab 83 (zweite Koppeleinrichtung) verbunden, der gleichfalls, wie es aus den Figuren 5 und 6 ersichtlich ist, als Vier- oder Mehrkant ausgestaltet ist. Der Torsionsstab 83 ist formschlüssig mit dem Exzenter 61 des dritten Verriegelungsmechanismus in der dritten Traverse 22 formschlüssig verbunden, so dass eine Drehung des Torsionsstabs 83 zu einer Drehung des Exzenters 61 und damit zur Betätigung des Verriegelungsmechanismuses 60 führt. Der Torsionsstab 83 ist dabei, wie es insbesondere aus Figur 5 ersichtlich ist, in einem der zweiten Teleskoprohre 21 aufgenommen und dadurch geschützt.

Durch den Übertragungsmechanismus 90 wird eine einzige Betätigung des Betätigungshebels 80, der direkt auf den Torsionsstab 81 wirkt, auch auf die Torsionsstäbe 82, 83 übertragen. Mit anderen Worten wird eine Rotation der Handhabe 80 in eine Rotation aller drei Torsionsstäbe 81-83 umgesetzt.

Im Folgenden wird die Funktionsweise kurz beschrieben werden.

Will ein Verwender das Stativbein, wie es in Figur 1 im vollständig zusammengeschobenen Zustand dargestellt ist, in eine gewünschte Position ausfahren, so wird der Betätigungshebel 80 vom Stativbein weg geschwenkt. Dadurch rotiert der Torsionsstab 81, welcher auf die Exzenter 41, 51 wirkt. Dabei bewegen sich die Exzenter aus den in den Figuren 5 und 7 dargestellten Verriegelungspositionen in die Freigabepositionen, wodurch die Klemmflächen 54 bzw. 44 der Verriegelungsmechanismen außer Eingriff mit den ersten bzw. zweiten Teleskoprohren 11 bzw. 21 gebracht werden. Dadurch wird ein Verschieben der zweiten Teleskopeinheit T2 zur ersten Teleskopeinheit T1 in Längsrichtung L ermöglicht. Des Weiteren wird bei obiger Betätigung der Handhabe 80 über die Zahnräder 91, 92 die Rotation der Handhabe 80 in gleichem Maße, ggf. übersetzt oder untersetzt, auf den Torsionsstab 82 übertragen. Dadurch wird auch der Exzenter 71 des vierten Verriegelungsmechanismuses rotiert, wodurch die Klemmelemente 72 außer Eingriff mit den zweiten Teleskoprohren 21 gelangen. Ferner wird die Rotation des Betätigungshebels 80 über die Zahnräder 91, 92, 93 und 94 auf den Torsionsstab 83 übertragen und dadurch der Exzenter 61 des dritten Verriegelungsmechanismuses gedreht, wodurch die Klemmfläche 64 außer Eingriff mit dem dritten Teleskoprohr 31 kommt. Damit sind auch die Verriegelungsstellen drei und vier, die die durch den dritten und vierten Verriegelungsmechanismus 60 bzw. 70 gebildet sind, gelöst und ein Verschieben der dritten Teleskopeinheit T3 relativ zur zweiten Teleskopeinheit T2 ist möglich.

Der Verbraucher kann nun die Teleskopabschnitte T1, T2 und T3 in einer gewünschten Relativposition zueinander einstellen. Zum Verriegeln wird der Betätigungshebel 80 wieder in die in Figur 1 dargestellte Position verschwenkt, wodurch über die Torsionsstäbe 81 bis 83 die Exzenter 41, 51, 61 und 71 wiederum gleichzeitig gedreht und die Klemmflächen 44, 54, 64 und 74 mit den Außenflächen der entsprechenden Teleskoprohre in Eingriff gebracht werden. Damit sind die Teleskopeinheiten T1 bis T3 relativ zueinander verriegelt und können nicht weiter verschoben werden. Darüber hinaus ergibt sich eine Verriegelung der Teleskopeinheiten T1 und T2 zueinander an der ersten Traverse 12 und an der zweiten Traverse 20 sowie der Teleskopeinheit T2 zur Teleskopeinheit T3 an der dritten Traverse 22 sowie der vierten Traverse 30. Damit bestehen vier Klemmstellen, die in Längsrichtung beabstandet sind und zu einer erhöhten Stabilität und Steifigkeit des ausgefahrenen Stativbeins führen.

Wie es bereits eingangs erwähnt wurde, ist es auch möglich den Betätigungshebel 80 statt am Verbindungsstück 10 an der Traverse 20 vorzusehen. Damit der Torsionsstab 81 nicht frei liegt, wäre es dann denkbar anstatt der direkten Kopplung des Betätigungshebels 80 die Betätigungsbewegung über weitere Zahnräder auf den Torsionsstab 81 zu übertragen ähnlich wie bei den Torsionsstäben 82, 83. Darüber hinaus wäre es in diesem Fall bevorzugt den Torsionsstab 81, ähnlich dem Torsionsstab 83, in einem der ersten Teleskoprohre 11 unterzubringen.

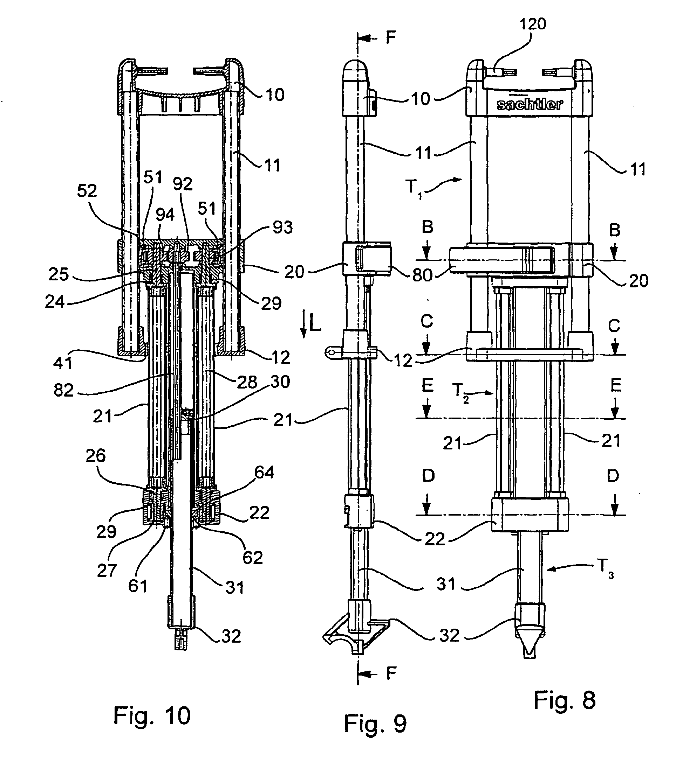

Im Folgenden wird das Bein eines erfindungsgemäßen Stativs gemäß einer zweiten Ausführungsform der vorliegenden Erfindung unter Bezugnahme auf die Figuren 8 bis 14 erläutert. Um Wiederholungen zu vermeiden, wird dabei auf eine wiederholte Beschreibung gleicher Elemente wie in der ersten Ausführungsform verzichtet.

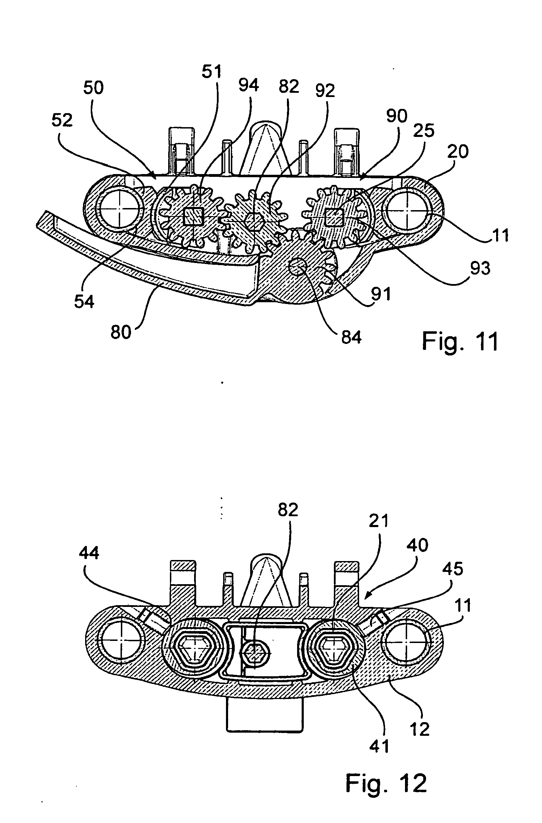

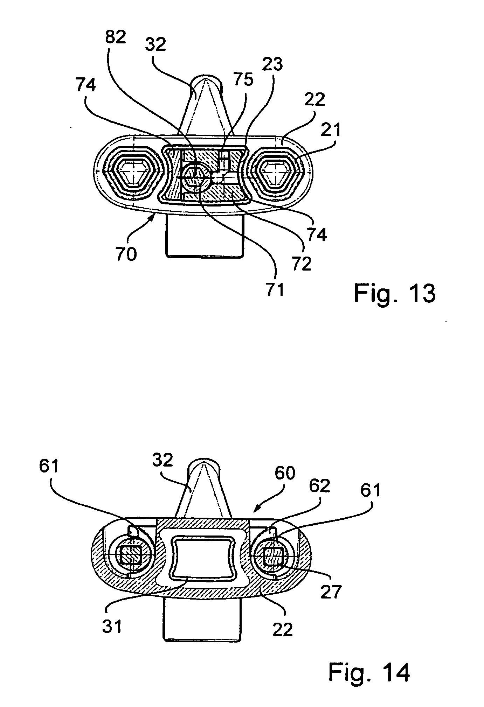

Bei der zweiten Ausführungsform sind die zweiten Teleskoprohre 21 der zweiten Teleskopeinheit T2 im Querschnitt dreieckig mit abgerundeten Kanten ausgestaltet (siehe beispielsweise Figuren 12 und 13). Die zweiten Teleskoprohre 21 sind dabei an ihren beiden gegenüberliegenden Enden mit Kappen 24, 26 versehen, die jeweils bolzenartige Vorsätze 25, 27 aufweisen, die sich in entgegengesetzten Richtungen in Längsrichtung L des Beins erstrecken. Diese bolzenförmigen Ansätze 25, 27 sind im Querschnitt als Vierkant ausgebildet (siehe beispielsweise Figuren 11 und 14) können aber auch als Mehrkant ausgestaltet sein. Die zweiten Teleskoprohre 21 sind im Bereich ihrer Kappen 24, 26 über Lager 29 drehbar in der zweiten Traverse 20 bzw. der dritten Traverse 22 gelagert. Zwischen den zweiten Teleskopeinheiten 21 ist ein Gehäuse 23 angeordnet und mit der zweiten Traverse 20 und der dritten Traverse 22 unbeweglich verbunden. Das Gehäuse 23 weist eine Innendimension bzw. -kontur auf, die im Wesentlichen der Außendimension bzw. -kontur des dritten Teleskoprohrs 31 entspricht. Das dritte Teleskoprohr 31 ist über die vierte Traverse 30 in diesem Gehäuse 23 in Längsrichtung L geführt und verschieblich aufgenommen.

Die Außenfläche des dritten Teleskoprohrs 31 bzw. dessen Querschnitt ist dabei derart gestaltet, dass es im Gegensatz zu dem ovalen Querschnitt aus der ersten Ausführungsform einen "viereckigen" Querschnitt aufweist, wobei jeweils den zweiten Teleskoprohren 21 zugewandte Seiten mit einer nach innen gerichteten Krümmung (Konkavität) versehen sind.

Der erste Verriegelungsmechanismus 40 ist in der ersten Traverse 12 vorgesehen. Er weist gleichermaßen wie bei der ersten Ausführungsform einen Exzenter 41 auf. Bei der zweiten Ausführungsform sind jedoch zwei Exzenter 41 vorgesehen, die jeweils formschlüssig mit den zwei zweiten Teleskoprohren 21 verbunden sind und sich zusammen mit den zweiten Teleskoprohren 21 drehen können. Darüber hinaus sind die zwei Exzenter 41 gleichzeitig als Klemmelemente ausgestaltet und weisen eine Klemmfläche 44 auf, die mit einer entsprechenden Gegenfläche, die von der ersten Traverse 12 gebildet wird, in Eingriff bringbar sind, wie es in Figur 12 dargestellt ist. Die Klemmkraft ist dabei auch über eine Einstelleinrichtung 45 ähnlich wie bei der ersten Ausführungsform, von außen zugänglich einstellbar.

Der zweite Verriegelungsmechanismus 50 weist gleichfalls zwei Exzenter 51 auf, die auf Klemmelemente 52 wirken. Die Klemmelemente 52 weisen jeweils eine Klemmfläche 54 auf, die mit den Außenflächen der ersten Teleskoprohre 11 in Eingriff bringbar sind.

Der dritte Verriegelungsmechanismus 60 weist ebenfalls zwei Exzenter 61 auf, die ähnlich wie bei der Ausführungsform 1 oben relativ zur dritten Traverse 22 drehbar sind. Diese Exzenter 61 wirken auf Klemmelemente 62, deren Klemmflächen 64 (Figur 10) auf die Außenfläche der gekrümmten Seiten des dritten Teleskoprohrs 31 gedrückt werden können, um eine reibschlüssige Klemmung des dritten Teleskoprohrs 31 (der dritten Teleskopeinheit T3) relativ zur dritten Traverse 22 (zweiten Teleskopeinheit T2) zu bewirken.

Der vierte Klemmmechanismus, der von der vierten Traverse 30 (Figur 10) aufgenommen ist, wird gebildet durch einen Exzenter 71, der auf zwei translatorisch in Richtung der Innenfläche des Gehäuses 23 verschiebliche Klemmelemente 72 wirkt. Dabei sind die Klemmelemente 72 senkrecht zur Drehrichtung des Exzenters 71 verschieblich und werden durch eine Rotation des Exzenters 71 mit ihren Klemmflächen 74 gegen die gleichfalls gekrümmten seitlichen Innenflächen des Gehäuses 23 der zweiten Teleskopeinheit T2 gedrückt, wodurch eine weitere Klemmstelle bzw. Verriegelungsstelle zwischen der zweiten Teleskopeinheit T2 und der dritten Teleskopeinheit T3 bewirkt wird.

Der Betätigungsmechanismus der zweiten Ausführungsform weist gleichfalls einen Betätigungshebel 80 auf, der jedoch Teil der Übertragungseinrichtung 90 ist. Er ist um eine Achse 84 drehbar in der zweiten Traverse 20 aufgenommen und weist ein erstes Teilzahnrad 91 auf. Das erste Teilzahnrad 91 kämmt mit einem zweiten Zahnrad 92 und einem dritten Zahnrad 93. Das zweite Zahnrad 92 wiederum kämmt mit einem vierten Zahnrad 94, wobei die Zahnräder jeweils drehbar in der zweiten Traverse 20 aufgenommen sind.

Das dritte und vierte Zahnrad 93 bzw. 94 stehen formschlüssig mit den bolzenförmigen Ansätzen 25 der zweiten Teleskoprohre 21 in Verbindung, so dass eine Rotation der Zahnräder 93 und 94 zu einer Rotation der zweiten Teleskoprohre 21 führt. Um die Torsionsbelastung beim Verriegeln nicht über die zweiten Teleskoprohre 21 übertragen und diese damit entsprechend stark ausgestalten zu müssen, verbindet die Kappen 24 und 26 jeweils ein Torsionsstab 28, der zur Übertragung des Drehmoments gedacht ist. Das zweite Zahnrad steht formschlüssig mit einem Torsionsstab 82 in Verbindung, der in Längsrichtung L in dem Gehäuse 23 und insbesondere im zusammengeschobenen Zustand im dritten Teleskoprohr 31 aufgenommen ist. Eine Rotation des zweiten Zahnrads 92 führt damit gleichfalls zu einer Rotation des Torsionsstabs 82. Der Torsionsstab 82 verbindet damit die zweite Traverse 20 mit dem vierten Verriegelungsmechanismus und bildet damit bei dieser Ausführungsform die erste Koppeleinrichtung. Die drehbaren Teleskoprohre 21 bilden eine Verbindung zwischen der zweiten Traverse und dem ersten Verriegelungsmechanismus 40 in der ersten Traverse 12 sowie dem dritten Verriegelungsmechanismus 60 in der dritten Traverse 22. Die drehbaren zweiten Teleskoprohre 21 bilden damit gemeinsam die zweite und dritte Koppeleinrichtung.

Im Folgenden wird kurz die Funktionsweise des Beins der zweiten Ausführungsform erläutert. Sollen alle Verriegelungsstellen gelöst werden, um das Stativbein aus- oder einfahren zu können, wird der Betätigungshebel 80 in Figur 8 vom dargestellten Bein weg um die Achse 84 verschwenkt. Durch diese Verschwenkung und die damit verbundene Drehung des ersten Zahnrads 91 werden die Zahnräder 93 und 94 (letzteres über das Zahnrad 92) gedreht. Diese Drehung führt über die bolzenförmigen Ansätze 25 zu einer Rotation der zweiten Teleskoprohre 21. Werden die zweiten Teleskoprohre 21 gedreht, drehen sich gleichzeitig die Exzenter 41 und 61. Dadurch werden die Verriegelungsmechanismen 40 und 60 gelöst. Gleichzeitig mit dieser Drehung werden die mit den Zahnrädern 93, 94 verbundenen Exzenter 51 des zweiten Verriegelungsmechanismuses gedreht und der zweite Verriegelungsmechanismus 50 an der zweiten Traverse 20 gelöst. Ferner wird durch eine Rotation des Betätigungshebels 80 das Zahnrad 93 und damit der Torsionsstab 82, der bei der dargestellten Ausführungsform als Mehrkant ausgestaltet ist, gedreht. Durch diese Drehung erfolgt eine Drehung des Exzenters 71 und eine Freigabe des Verriegelungsmechanismuses 70. Damit sind alle Verriegelungsstellen gelöst und die Teleskopeinheiten T1 bis T3 können relativ zueinander in die gewünschte Stellung verschoben werden.

Zum Verriegeln bewegt der Verwender den Betätigungshebel 80 wieder in die Figur 8 dargestellte Ausgangsstellung. Dabei drehen sich die Zahnräder 92, 93 und 94 in entgegengesetzter Richtung. Bei dieser Bewegung werden die Exzenter 41, 51, 61, 71 in die Klemmstellung bewegt. Die Exzenter 41 bilden gleichzeitig auch das Klemmelement und kommen mit Ihrer Klemmfläche 44 in Eingriff mit einer Innenfläche der ersten Traverse 12, wodurch eine erste Klemmung der zweiten Teleskopeinheit T2 mit der ersten Teleskopeinheit T1 erfolgt. Des Weiteren gelangen die Exzenter 51 mit den Klemmelementen 52 in Eingriff und drücken die Klemmeelemente 52 mit deren Klemmflächen 54 gegen die Außenflächen der ersten Teleskoprohre 11, wodurch eine zweite Klemmung der zweiten Teleskopeinheit T2 relativ zur ersten Teleskopeinheit T1, jedoch in einem Abstand in Längsrichtung L zur ersten, erzielt wird.

Ferner wird der Exzenter 61, der mit den Ansätzen 27 der Kappen 26 der zweiten Teleskoprohre 21 verbunden ist, durch Rotation der Teleskoprohre 21, ausgelöst über die Zahnräder 93, 94, gedreht und drückt die Klemmelemente 62 mit deren Klemmflächen 64 gegen die Außenfläche des dritten Teleskoprohrs 31, wodurch eine erste Klemmstelle zwischen der zweiten Teleskopeinheit T2 und der dritten Teleskopeinheit T3 erzielt wird. Schließlich wird über das Zahnrad 92 und den Torsionsstab 82 der Exzenter 71 des vierten Verriegelungsmechanismus 70 gedreht und drückt die Klemmelemente 72 mit ihren Klemmeflächen 74 gegen die Innenfläche des Gehäuses 23 (zweiter Beinabschnitt) der zweiten Teleskopeinheit T2. Der in der vierten Traverse 30 angeordnete vierte Verriegelungsmechanismus 70 führt damit zur einer weiteren Verriegelungsstelle zwischen der zweiten Teleskopeinheit T2 und der dritten Teleskopeinheit T3, wobei diese Klemmstelle jedoch in einem Abstand in Längsrichtung L zur dritten Verriegelungsstelle liegt.

Damit werden die Teleskopeinheiten T1 bis T3 jeweils an zwei zueinander in Längsrichtung L beabstandeten Stellen verriegelt, wodurch die Steifigkeit und Stabilität des Stativbeins und damit Stativs auf gleiche Art und Weise wie bei der vorherigen ersten Ausführungsform erhöht wird.

Die zweite Ausführungsform ist gegenüber der ersten Ausführungsform dahingehend vorteilhaft, dass kein Übertragungsglied und insbesondere keine Koppelstange frei liegt, sei es im vollständig ausgefahrenen oder im zusammengeschobenen Zustand. Damit sind die entsprechenden Übertragungsglieder bzw. Koppeleinrichtungen geschützt und es werden wenig Zwischenräume gebildet.

Es versteht sich, dass die oben dargestellten Ausführungsformen nur zwei Möglichkeiten sind, um die vorliegende Erfindung umzusetzen und dass dem Fachmann vielerlei Modifikationen und Abwandlungen ersichtlich sein werden, die aber dennoch den Grundgedanken der vorliegenden Erfindung, wie er in den folgenden Patentansprüchen definiert ist, verwirklichen. Darüber hinaus ist klar, dass Einzelmerkmale der Ausführungsformen auch miteinander kombiniert werden können, insofern sie einander nicht widersprechen. Z.B. ist es denkbar auch in der Ausführungsform in Figur 1 die dritte Teleskopeinheit T3 bzw. deren Teleskoprohr 31 in einem Gehäuse 23, wie in der zweiten Ausführungsform zu führen. Darüber hinaus ist es auch denkbar den Betätigungshebel 80 zweizuteilen, d.h. senkrecht zur Rotationsachse 84 beispielsweise und einen Teil des Hebels für die Verriegelungsmechanismen 40, 50 sowie den anderen für die Verriegelungsmechanismen 60, 70 zu verwenden, so dass auch die Teleskopeinheiten T1 und T2 bzw. T2 und T3 alleinstehend zueinander verschiebbar und verriegelbar sind ohne die Verriegelung der anderen lösen zu müssen. Darüber hinaus ist es auch denkbar die Koppeleinrichtungen nicht durch Torsionsstäbe bzw. andere rotierende Elemente (z.B. die Teleskoprohre 21 der zweiten Ausführungsform) auszugestalten, sondern vielmehr durch biegeschlaffe Elemente, wie beispielsweise Drahtseile, die mit den entsprechenden Verriegelungsmechanismen zusammenwirken. Auch wäre es denkbar statt der rotatorischen Bewegung der Stäbe eine Zug- oder Druckkraft, d.h. eine translatorische Bewegung in Längsrichtung L auszuführen, um die Verriegelungsmechanismen zu betätigen. Darüber hinaus ist die vorliegende Erfindung nicht auf dreistufige Stative beschränkt, sondern kann auch in ein oder drei bzw. mehrstufigen Stativen zum Einsatz kommen.

## Patentansprüche

1. Stativ, insbesondere Kamerastativ, umfassend:
eine Aufnahme zur Montage eines Geräts, insbesondere einer Kamera; und
wenigstens ein mit der Aufnahme in Verbindung stehendes Bein, das wenigstens zwei Teleskopeinheiten (T1, T2) umfasst, von denen eine erste Teleskopeinheit (T1) mit der Aufnahme in Verbindung steht und eine zweite Teleskopeinheit (T2) relativ zu der ersten Teleskopeinheit verschiebbar und in einer gewünschten Position zur ersten Teleskopeinheit (T1) verriegelbar ist, wobei zur Verriegelung der Teleskopeinheiten (T1, T2) zwei in Längsrichtung des Beins beabstandete Verriegelungsstellen zwischen der zweiten Teleskopeinheit (T2) und der ersten Teleskopeinheit (T1) vorgesehen sind,
**dadurch gekennzeichnet, dass** das Bein ferner eine dritte Teleskopeinheit (T3) aufweist, die zu der zweiten Teleskopeinheit (T2) verschiebbar und in einer gewünschten Position zur zweiten Teleskopeinheit (T2) verriegelbar ist, wobei zur Verriegelung der Teleskopeinheiten zwei in Längsrichtung des Beins beabstandete Verriegelungsstellen zwischen der dritten Teleskopeinheit (T3) und der zweiten Teleskopeinheit (T2),
wobei die erste Teleskopeinheit (T1) ein Verbindungsstück (10) zur Verbindung mit der Aufnahme, eine erste Traverse (12) und einen ersten länglichen Beinabschnitt (11), der mit dem Verbindungsstück (10) und der ersten Traverse (12) verbunden ist, umfasst, die zweite Teleskopeinheit (T2) eine zweite Traverse (20), die sich zur Führung der zweiten Teleskopeinheit (T2) an dem ersten Beinabschnitt (11) abstützt, eine dritte Traverse (22) und einen zweiten länglichen Beinabschnitt (21), der mit der zweiten (20) und der dritten (22) Traverse verbunden ist umfasst, wobei eine erste Verriegelungsstelle zwischen der ersten Teleskopeinheit (T1) und der zweiten Teleskopeinheit (T2) durch einen ersten Verriegelungsmechanismus (40) gebildet ist, der von der ersten Traverse (12) aufgenommen ist, und eine zweite Verriegelungsstelle zwischen der ersten Teleskopeinheit (T1) und der zweiten Teleskopeinheit (T2) durch einen zweiten Verriegelungsmechanismus (50) gebildet ist, der von der zweiten Traverse (20) aufgenommen ist, und
die dritte Teleskopeinheit (T3) einen Fuß (32) und eine vierte Traverse (30), die sich zur Führung der dritten Teleskopeinheit (T3) an dem zweiten Beinabschnitt (21; 23) abstützt und wenigstens einen dritte länglichen Beinabschnitt (31) umfasst, wobei eine erste Verriegelungsstelle zwischen der dritten Teleskopeinheit (T3) und der zweiten Teleskopeinheit (T2) durch einen dritten Verriegelungsmechanismus (60) gebildet ist, der von der dritten Traverse (22) aufgenommen ist, und eine vierte Verriegelungsstelle zwischen der dritten Teleskopeinheit (T3) und der zweiten Teleskopeinheit (T2) durch einen vierten Verriegelungsmechanismus (70) gebildet ist, der von der vierten Traverse (30) aufgenommen ist,
wobei eine erste Koppeleinrichtung (82) die zweite Traverse (20) mit dem vierten Verriegelungsmechanismus (70) verbindet.

2. Stativ nach Anspruch 1, bei dem die erste Koppeleinrichtung (82) in einem Gehäuse (23) des zweiten Beinabschnitts aufgenommen ist, in dem der dritte Beinabschnitt (31) geführt ist.

3. Stativ nach Anspruch 1 oder 2, bei dem eine zweite Koppeleinrichtung (83; 21) die zweite Traverse (20) mit dem dritten Verriegelungsmechanismus (60) verbindet.

4. Stativ nach Anspruch 3, bei dem die zweite Koppeleinrichtung (83; 21) in dem zweiten Beinabschnitt (21) aufgenommen ist.

5. Stativ nach einem der Ansprüche 1 bis 4, bei dem der dritte (60) und der vierte (70) Verriegelungsmechanismus gemeinsam mit dem ersten (40) und dem zweiten (50) Verriegelungsmechanismus betätigbar sind.

6. Stativ nach einem der Ansprüche 1 bis 5, bei dem der erste (40) und der zweite (50) Verriegelungsmechanismus über eine dritte Koppeleinrichtung (81; 21) verbunden, gemeinsam betätigbar sind.

7. Stativ nach Anspruch 6, ferner umfassend eine Handhabe (80), die an der zweiten Traverse (20) vorgesehen ist und mit der dritten Koppeleinrichtung (81) zusammenwirkt, wobei die dritte Koppeleinrichtung in dem ersten Beinabschnitt (11) verläuft.

8. Stativ nach Anspruch 6, ferner umfassend eine Handhabe (80), die an der zweiten Traverse (20) vorgesehen ist und mit der dritten Koppeleinrichtung zusammenwirkt, wobei die dritte Koppeleinrichtung durch den zweiten Beinabschnitt (21) gebildet ist, wozu der zweite Beinabschnitt beweglich, vorzugsweise drehbar, in der zweiten (20) und dritten (22) Traverse gelagert ist.

9. Stativ nach Anspruch 6, ferner umfassend eine Handhabe (80), die an dem Verbindungsstück (10) vorgesehen ist und mit der dritten Koppeleinrichtung (81) zusammenwirkt, wobei die zweite Traverse (20) relativ zur dritten Koppeleinrichtung (81) längs verschiebbar ist.

10. Stativ nach Anspruch 9, bei dem die dritte Koppeleinrichtung (81) an der Handhabe (80) befestigt ist.

11. Stativ nach einem der Ansprüche 10 bis 14, ferner umfassend eine Übertragungseinrichtung (90), zum Übertragen einer Bewegung der Handhabe (80) auf wenigstens eine der Koppeleinrichtungen (81, 82, 83; 21), vorzugsweise zwei der oder alle Koppeleinrichtungen.

12. Stativ nach einem der Ansprüche 6 bis 11 in Abhängigkeit von Anspruch 2, bei dem die zweite Koppeleinrichtung (21) durch die dritte Koppeleinrichtung (21) gebildet ist.

## Claims

1. Stand, in particular camera stand, comprising: a receptacle for mounting an apparatus, in particular a camera; and at least one leg connected to the receptacle and comprises at least two telescopic units (T1, T2), of which a first telescopic unit (T1) is connected to the receptacle and a second telescopic unit (T2) is displaced relative to the first telescopic unit and can be locked in a desired position in relation to the first telescopic unit (T1), wherein two locking points set apart in the longitudinal direction of the leg are provided between the second telescopic unit (T2) and the first telescopic unit (T1) for locking the telescopic units (T1, T2), **characterised in that** the leg also has a third telescopic unit (T3) which is displaceable in relation to the second telescopic unit (T2) and can be locked in a desired position in relation to the second telescopic unit (T2), wherein two locking points set apart in the longitudinal direction of the leg [are provided] between the third telescopic unit (T3) and the second telescopic unit (T2) for locking the telescopic units, wherein the first telescopic unit (T1) comprises a connecting piece (10) for connecting to the receptacle, a first crossmember (12) and a first elongate leg portion (11) which is connected to the connecting piece (10) and the first crossmember (12), the second telescopic unit (T2) comprises a second crossmember (20) which is supported on the first leg portion (11) for guiding the second telescopic unit (T2), a third crossmember (22) and a second elongate leg portion (21) which is connected to the second (20) and the third (22) crossmember, wherein a first locking point between the first telescopic unit (T1) and the second telescopic unit (T2) is formed by a first locking mechanism (40) which is received by the first crossmember (12) and a second locking point between the first telescopic unit (T1) and the second telescopic unit (T2) is formed by a second locking mechanism (50) which is received by the second crossmember (20), and the third telescopic unit (T3) comprises a foot (32) and a fourth crossmember (30), which is supported on the second leg portion (21; 23) for guiding the third telescopic unit (T3), and at least a third elongate leg portion (31), wherein a first locking point between the third telescopic unit (T3) and the second telescopic unit (T2) is formed by a third locking mechanism (60) which is received by the third crossmember (22) and a fourth locking point between the third telescopic unit (T3) and the second telescopic unit (T2) is formed by a fourth locking mechanism (70) which is received by the fourth crossmember (30), wherein a first coupling means (82) connects the second crossmember (20) to the fourth locking mechanism (70).

2. Stand according to claim 1, in which the first coupling means (82) is received in a housing (23) of the second leg portion in which the third leg portion (31) is guided.

3. Stand according to claim 1 or 2, in which a second coupling means (83; 21) connects the second crossmember (20) to the third locking mechanism (60).

4. Stand according to claim 3, in which the second coupling means (83; 21) is received in the second leg portion (21).

5. Stand according to one of claims 1 to 4, in which the third (6) and the fourth (70) locking mechanism can be actuated jointly with the first (40) and the second (50) locking mechanism.

6. Stand according to one of claims 1 to 5, in which the first (40) and the second (50) locking mechanism, which are connected via a third coupling means (81; 21), can be actuated jointly.

7. Stand according to claim 6, further comprising a handle (80) which is provided on the second crossmember (20) and interacts with the third coupling means (81), wherein the third coupling means runs in the first leg portion (11).

8. Stand according to claim 6, further comprising a handle (80) which is provided on the second crossmember (20) and interacts with the third coupling means, wherein the third coupling means is formed by the second leg portion (21), for which purpose the second leg portion is mounted movably, preferably rotatably, in the second (20) and third (22) crossmember.

9. Stand according to claim 6, further comprising a handle (80) which is provided on the connecting piece (10) and interacts with the third coupling means (81), wherein the second crossmember (20) is longitudinally displaceable relative to the third coupling means (81).

10. Stand according to claim 9, in which the third coupling means (81) is fastened to the handle (80).

11. Stand according to one of claims 10 to 14, further comprising a transmission means (90) for transmitting a movement of the handle (80) to at least one of the coupling means (81, 82, 83; 21), preferably two of the or all the coupling means.

12. Stand according to one of claims 6 to 11 as dependent on claim 2, in which the second coupling means (21) is formed by the third coupling means (21).

## Revendications

1. Pied, en particulier pied de caméra, comprenant :
une fixation pour le montage d'un appareil, en particulier d'une caméra ; et
au moins une jambe en liaison avec la fixation, laquelle comprend au moins deux unités télescopiques (T1, T2) parmi lesquelles une première unité télescopique (T1) est en liaison avec la fixation et une seconde unité télescopique (T2) est déplaçable par rapport à la première unité télescopique et verrouillable dans une position souhaitée par rapport à la première unité télescopique (T1), dans lequel pour le verrouillage des unités télescopiques (T1, T2), il est prévu deux positions de verrouillage, espacées dans la direction longitudinale de la jambe entre la première unité télescopique (T1) et la seconde unité télescopique (T2),
**caractérisé en ce que** la jambe comprend en outre une troisième unité télescopique (T3) laquelle est déplaçable par rapport à la seconde unité télescopique (T2) et verrouillable dans une position souhaitée par rapport à la seconde unité télescopique (T2), dans lequel pour le verrouillage des unités télescopiques, il est prévu deux positions de verrouillage, espacées dans la direction longitudinale de la jambe, entre la seconde unité télescopique (T2) et la troisième unité télescopique (T3),
dans lequel la première unité télescopique (T1) comprend une pièce de liaison (10) pour la liaison avec la fixation, une première traverse (12) et une première portion longitudinale de jambe (11), qui est reliée à la pièce de liaison (10) et à la première traverse (12), la seconde unité télescopique (T2) comprend une seconde traverse (20) qui, pour le guidage de la seconde unité télescopique (T2), s'appuie sur la première portion de jambe (11), une troisième traverse (22) et une seconde portion longitudinale de jambe (21), qui est reliée à la seconde traverse (20) et à la troisième traverse (22), de sorte qu'une première position de verrouillage entre la première unité télescopique (T1) et la seconde unité télescopique (T2) est formée par un premier mécanisme de verrouillage (40) qui est reçu par la première traverse (12), et qu'une seconde position de verrouillage entre la première unité télescopique (T1) et la seconde unité télescopique (T2) est formée par un second mécanisme de verrouillage (50) qui est reçu par la seconde traverse (20), et
la troisième unité télescopique (T3) comprend un pied (32) et une quatrième traverse (30) qui, pour le guidage de la troisième unité télescopique (T3), s'appuie sur la seconde portion de jambe (21 ; 23), et
au moins une troisième portion longitudinale de jambe (31), de sorte qu'une première position de verrouillage entre la troisième unité télescopique (T3) et la seconde unité télescopique (T2) est formée par un troisième mécanisme de verrouillage (60) qui est reçu par la troisième traverse (22), et qu'une quatrième position de verrouillage entre la troisième unité télescopique (T3) et la seconde unité télescopique (T2) est formée par un quatrième mécanisme de verrouillage (70) qui est reçu par la quatrième traverse (30),
dans lequel un premier système de couplage (82) relie la seconde traverse (20) avec le quatrième mécanisme de verrouillage (70).

2. Pied selon la revendication 1, dans lequel le premier système de couplage (82) est reçu dans un boîtier (23) de la seconde portion de jambe, dans laquelle est guidée la troisième portion de jambe (31).

3. Pied selon la revendication 1 ou 2, dans lequel un second système de couplage (83 ; 21) relie la seconde traverse (20) avec le troisième mécanisme de verrouillage (60).

4. Pied selon la revendication 3, dans lequel le second système de couplage (83 ; 21) est reçu dans la seconde portion de jambe (21).

5. Pied selon l'une des revendications 1 à 4, dans lequel le troisième mécanisme de verrouillage (60) et le quatrième mécanisme de verrouillage (70) sont susceptibles d'être actionnés conjointement avec le premier mécanisme de verrouillage (40) et avec le second mécanisme de verrouillage (50).

6. Pied selon l'une des revendications 1 à 5, dans lequel le premier mécanisme de verrouillage (40) et le second mécanisme de verrouillage (50) sont susceptibles d'être actionnés conjointement en étant reliés via un troisième système de couplage (81 ; 21).

7. Pied selon la revendication 6, comprenant en outre une manette (80) qui est prévue sur la seconde traverse (20) et qui coopère avec le troisième système de couplage (81), ledit troisième système de couplage s'étendant dans la première portion de jambe (11).

8. Pied selon la revendication 6, comprenant en outre une manette (80) qui est prévue sur la seconde traverse (20) et qui coopère avec le troisième système de couplage, ledit troisième système de couplage étant formé par la seconde portion de jambe (21), la seconde portion de jambe étant montée mobile, de préférence en rotation, dans la seconde traverse (20) et dans la troisième traverse (22).

9. Pied selon la revendication 6, comprenant en outre une manette (80) qui est prévue sur la pièce de liaison (10) et qui coopère avec le troisième système de couplage (81), ladite seconde traverse (20) étant déplaçable longitudinalement par rapport au troisième système de couplage (81).

10. Pied selon la revendication 9, dans lequel le troisième système de couplage (81) est fixé sur la manette (80).

11. Pied selon l'une des revendications 10 à 14, comprenant en outre un moyen de transmission (90), pour la transmission d'un mouvement de la manette (80) à l'un au moins des systèmes de couplage (81, 82, 83 ; 21), de préférence à deux ou à tous les systèmes de couplage.

12. Pied selon l'une des revendications 6 à 11 prise en dépendance de la revendication 2, dans lequel le second système de couplage (21) est formé par le troisième système de couplage (21).
